# EUROPEAN PATENT SPECIFICATION

(11) **EP 2 584 081 B1**
(45) Date of publication and mention of the grant of the patent: **02.11.2016**
(21) Application number: 13000282.7
(22) Date of filing: 23.01.2012
(51) Int. Cl.: D04H 1/541, D04H 1/4218, H01M 2/16, D21H 13/46, D21H 13/14, D21H 13/20, D21H 15/02, D21H 13/40

(54) **Self-adhesive fiber mat**
Selbstklebende Fasermatte
Tapis à fibre auto-adhésive

(30) Priority: 24.01.2011 US 201113012058
(43) Date of publication of application: 24.04.2013
(62) Divisional of application: 12000389.2
(73) Proprietor: Johns Manville, Denver, CO 80202 (US)
(72) Inventor: Muhammad, Shamsheer, Ann Arbor, MI 48103 (US); Weller, Jr., David Earl, Littleton, CO 80125 (US); Nandi, Souvik, Arvada, CO 80003 (US); Blanchard, John P., Oakland, MI 48363 (US)
(74) Representative: Mai, Dörr, Besier

(56) References cited:
- WO-A1-00/77875
- US-B1- 6 200 706
- US-B2- 6 821 672

## Description

### BACKGROUND OF THE INVENTION

The subject invention relates generally to fiber mat products and more specifically to fiber mats including an adhesive material that adhesively bonds the fiber mat to one or more other mats.

Fiber mats generally include one or more fibers that may be bonded or adhered to other fiber mats, films, or sheets to provide a fiber mat product having one or more desired physical properties. For example, in some instances a fiber mat may be bonded to another fiber mat to provide a fiber mat product having a desired permeability. In other instances, the fiber mats may be bonded to provide a desired tensile strength, thickness, permeability, etc. In one specific example, a fiber mat product may be used in a battery separator to separate positive and negative electrodes.

The amount and/or type of adhesive used to bond or adhere the various fiber mats and/or layers of the fiber mat product may affect one or more physical properties of the fiber mat product. For example, if too little adhesive material is used to adhere the fiber mats and/or layers, the various fiber mats and/or layers may fail to properly adhere or stick together. On the other hand, if too much adhesive material is used, the extra adhesive may negatively impact one or more physical properties of the fiber mat product. For example, the extra adhesive may increase the thickness of the fiber mat product, close off or clog the pores of the fiber mat product, decrease the tensile strength of the fiber mat product, react with one or more elements, etc. In addition, using adhesive may result in a fiber mat product having an uneven distribution of adhesive material throughout the fiber mat product due to imprecise control in the application of the adhesive material, migration of the adhesive material after application, etc. The uneven distribution may affect the overall performance of the fiber mat product and/or the uniformity between similar fiber mat products.

### BRIEF SUMMARY OF THE INVENTION

The present invention provides fiber mats according to claim 1, that are capable of adhering or bonding to other mats, films, or sheets without the need to apply an adhesive material during lamination or bonding of the mats, films, and/or sheets. According to one embodiment of the invention, a mat product may include a fibrous mat having a plurality of glass, polymer, and/or other fibers and a plurality of bi-component fibers intermixed with the glass, polymer, and/or other fibers. Each of the plurality of the bi-component fibers may include core-sheath, including any eccentric core-sheat, and/or side-by-side type bi-component fibers.
The bi-component fibers are composed of a high melting point temperature resin (B) and a low melting point temperature resin (A). The high melting point temperature resin (B) has a melting point which is at least 5°C higher, preferably at least 10°C higher, most preferred at least 20°C higher, than the melting point temperature of the low melting point temperature resin (A). The sheath material is typically the outer material at least substantially surrounding the core material. The core material has a melting point which is at least 5°C higher, preferably at least 10°C higher, most preferred at least 20°C higher, than the melting point temperature of the outer material, as explained above, and may soften when exposed to heat to thereby enable the bi-component fiber to bond with one or more other fibers and/or surfaces adjacent to the bi-component fibers. The core material may provide support for the bi-component fiber when the outer material is softened. The mat product may also be bonded with a polymeric film sheet coextensive with the fibrous mat which preferably is made from the core or outer materials. The plurality of fibers may be bound together using a binder comprising a polymeric resins that may provide strength to the fiber mat. Bonding between the polymeric film sheet and the fibrous mat may occur as a result of the outer material bonding with a surface of the polymeric film sheet. The final mat product may be a battery separator mat configured to separate the positive and negative electrodes of a battery.

According to another embodiment, an adhesive fiber mat may include a plurality of fibers, preferably based on glass and/or polymeric fibers, said mat having a length, a width, and a bonding face defined by the length and the width. The plurality of fibers may include a plurality of bonding fibers having a melting point temperature between about 90 degrees Celsius and 200 degrees Celsius so that the plurality of bonding fibers soften when exposed to heat to thereby enable one or more of the plurality of bonding fibers to bond with a material adjacent to the bonding face. Additionally or alternatively, the plurality of fibers may include a binder comprising a bonding resin having a low melting point temperature relative to the plurality of fibers, the difference in the melting temperatures being at least 5°C, preferably at least 10°C, most preferred at least 20°C, so that the bonding resin softens when exposed to heat to thereby enable the bonding resin to bond with a material (e.g., polymeric film) adjacent to the bonding face. The bonding resin may include a polyolefin dispersion or a polyolefin dispersion with an acrylic based binder.

Each fiber of the plurality of bonding fibers may be a bi-component fiber that may include a core material and an outer material surrounding the core material. The core material may have a melting point temperature greater than 130 degrees Celsius and the outer material may have a melting point temperature between about 90 degrees Celsius and 200 degrees Celsius, provided that the core material has a melting point which is at least 5°C higher, preferably at least 10°C higher, most preferred at least 20°C higher, than the melting point temperature of the outer material. The low melting point temperature resin (A), in particular the outer material, may soften and/or melt when exposed to heat to enable the bi-component fiber to bond with a material, surface, or fiber adjacent to the bonding face and the core material may provide support for the bi-component fiber when the outer material is softened and/or melted. The high melting point temperature resin (B), in particular the core material may include one or more of the following materials: aliphatic polyester, co-polyester, co-polypropylene, ethyl vinyl acetate, high density polyethylene, polylactic acid, etc. In addition, the outer material may include one or more of the following materials: aliphatic polyethylene terephthalate, polylactic acid, polyester, polyethylene, polypropylene, polyethylene terephthalate, polyethylene vinyl acetate, etc. The bi-component fibers may be between about 2mm and 20mm in length. In addition, the low melting point temperature of the outer material may be between 90 degrees Celsius and 200 degrees.

The adhesive fiber mat may further include a plurality of glass fibers. The plurality of glass fibers may form a separate layer substantially coextensive with and adjacent to the adhesive fiber mat or the plurality of glass fibers may be intermixed/entangled with the plurality of fibers.

According to another embodiment, a bi-component fiber may include a core material and an outer material surrounding the core material. The core material may have a high melting point temperature and the outer material may have a low melting point temperature relative to each other. The outer material may soften and/or melt when exposed to heat to enable the bi-component fiber to bond with one or more adjacent materials by adhesion between the outer material and the one or more adjacent materials. The core material may not substantially soften and/or melt when exposed to heat to provide support for the bi-component fiber when the outer material is softened and/or melted.

According to another embodiment, a method for producing a self-adhesive fiber mat may include dispersing glass fibers in a liquid solution. The method may also include dispersing bonding fibers in the liquid solution so that the liquid solution includes dispersed glass fibers and dispersed bonding fibers. The bonding fibers may have a low melting point temperature relative to the glass fibers so that the bonding fibers soften and/or melt when exposed to heat to enable the bonding fibers to adhesively bond to one or more adjacent fibers. The method may further include distributing the liquid solution over a porous surface and removing at least a portion of the liquid from the liquid solution so that the dispersed glass fibers and dispersed bonding fibers form a layer of intermixed glass and bonding fibers. The method may additionally include applying a binder to the layer of intermixed glass and bonding fibers to at least temporarily bond the intermixed glass and bonding fibers. The method may additionally include drying the layer to form the self-adhesive fiber mat.

According to another embodiment, a method for producing a multi-layered self-adhesive fiber mat may include dispersing glass and/or polymer fibers in a first liquid solution. The method may also include dispersing bonding fibers in a second liquid solution. The bonding fibers may have a low melting point temperature relative to the glass and/or polymer fibers so that the bonding fibers soften and/or melt when exposed to heat to thereby enable the bonding fibers to bond with one or more adjacent materials. The method may further include distributing the first liquid solution over a porous surface and removing at least a portion of the liquid from the first liquid solution to form a first layer of glass and/or polymer fibers. The method may additionally include distributing the second liquid solution over the first layer of glass and/or polymer fibers and removing at least a portion of the liquid from the second liquid solution to form a second layer of bonding fibers atop the first layer. The method may additionally include applying a binder to the first layer and second layer to at least temporarily bond the first layer with the second layer. The method may additionally include drying the first layer and second layer to form the multi-layered self-adhesive fiber mat.

According to another embodiment, a method for producing a self-adhesive fiber mat may include dispersing glass fibers in a liquid solution. The method may also include distributing the liquid solution over a porous surface. The method may further include removing at least a portion of the liquid from the liquid solution so that the dispersed glass fibers form a layer of glass fibers. The method may additionally include applying a binder to the layer of glass fibers. The binder may include a bonding resin having a low melting point temperature relative to the glass fibers so that the bonding resin softens when exposed to heat to thereby enable the bonding resin to adhesively bond to one or more adjacent fibers. The method may additionally include drying the layer to form the self-adhesive fiber mat.

### BRIEF DESCRIPTION OF THE DRAWINGS

FIG. 1 is a schematic perspective view of a fiber mat according to one embodiment of the present invention.
FIG. 2 is a schematic perspective view of a fiber mat bonded or adhered to another mat, film, or sheet according to one embodiment of the present invention.
FIG. 3 is a perspective view of a bi-component fiber according to one embodiment of the present invention.
FIG. 4 is a schematic perspective view of a system for manufacturing a fiber mat according to one embodiment of the present invention.
FIG. 5 is a schematic perspective view of a lamination device for laminating a fiber mat with another mat, film, or sheet according to one embodiment of the present invention.
FIG. 6 is a method for manufacturing a fiber mat according to one embodiment of the present invention.
FIG. 7 is another method for manufacturing a fiber mat according to one embodiment of the present invention.
FIG. 8 is a method for bonding a fiber mat with another mat, film, or sheet according to one embodiment of the present invention.

### DETAILED DESCRIPTION OF THE INVENTION

The present invention provides self-adhesive fiber mats that may be adhered or bonded to other mats, films, or sheets without applying an adhesive material during bonding of the mats, films, and/or sheets. The term self-adhesive as used herein refers to the fact that adhesive materials (e.g., glues, etc.) need not be applied during bonding or lamination of the self-adhesive fiber mat with another mat, film, and/or sheet. Generally all that is needed to bond or adhere the self-adhesive fiber mat with one or more materials is heat and/or pressure.

The self-adhesive fiber mat may include a plurality of fibers. Preferably, the self-adhesive fiber mat comprises fibers based on glass fibers and bonding fibers. Said bonding fibers are preferably the aforementioned bi-component fibers and/or bonding fibers. The self-adhesive fiber mat may contain other polymer fibers having a melting point temperature being at least 5°C, preferably at least 10°C, most preferred at least 20°C, above the melting point temperature of the bonding fibers or the melting point temperature of the low melting point temperature resin (A) of the bi-component fibers, in particular the outer material of the bi-component fibers. The upper limit for the amount of bonding fibers is preferably not more than 50% by weight, in particular less than 35% by weight, most preferred less than 25% by weight, of the amount of total fibers and the lower limit for the amount of bonding fibers is preferably at least 1% by weight, in particular at least 5% by weight, more preferred at least 10% by weight, most preferred at least 15% by weight, of the amount of total fibers.
The upper limit for the amount of bi-component fibers is preferably not more than 60% by weight, in particular not more than 40% by weight, of the amount of total fibers and the lower limit for the amount of bonding fibers is preferably at least 5% by weight, in particular at least 10% by weight, most preferred at least 15% by weight, of the amount of total fibers.
The plurality of fibers may include bonding fibers that facilitate in bonding the fibers together and/or in bonding the self-adhesive fiber mat to another mat, film, or sheet. The plurality of fibers may also include one or more other fibers, such as polymer fibers, glass fibers, etc. The self-adhesive fiber mat may also include a binder having a bonding resin that facilitates in bonding the fibers together and that facilitates in bonding the self-adhesive fiber mat with another mat, film, or sheet. The bonding fibers and/or bonding resin may be made of a material with a low melting point temperature relative to the polymeric fibers, the glass fibers, and/or the fibers of the self-adhesive fiber mat and/or another mat, film, or sheet to which the self-adhesive fiber mat may be bonded. The low melting point temperature bonding fibers and/or bonding resin may soften and/or melt when exposed to heat. The self-adhesive fiber mat may then be pressed against another mat, film, or sheet so that the softened or melted bonding fibers and/or bonding resin press against fibers and/or a surface of the mat, film, or sheet. The fibers and/or surface of the mat, film, or sheet may compress into the softened and/or melted bonding fibers and/or bonding resin and the bonding fibers and/or bonding resin may act as a glue to stick, adhere, and/or otherwise bond the self-adhesive fiber mat with the fibers and/or surface of the other mat, film, or sheet. Specifically, the softened or melted bonding fibers and/or bonding resin may mesh with, flow into, soak, saturate, and/or form around the fibers and/or surface of the other mat, film, or sheet. The self-adhesive fiber mat may then be cooled so that the bonding fibers and/or bonding resin harden and/or reform affixed to the fibers and/or surface of the other mat, film, or sheet.

In addition to bonding with the fibers and/or surface of another mat, film, or sheet, the bonding fibers and/or bonding resin may also adhere to or bond with one or more fibers included or used in the self-adhesive fiber mat such as polymer fibers, glass fibers, etc. In this manner, the bonding fibers and/or bonding resin may not only adhere or bond the self-adhesive fiber mat with another mat, film, or sheet, but the bonding fibers and/or bonding resin may also bond or adhere the fibers that comprise the self-adhesive fiber mat together. In other words, the bonding fibers and/or bonding resin may act as a glue to bond both the fibers of the self-adhesive fiber mat together as well as bond the self-adhesive fiber mat with another adjacent mat, film, or sheet. In one embodiment, the self-adhesive fiber mat may be disposed between two mats, films, or sheets so that the self-adhesive fiber mat bonds the two mats, films, or sheets together.

The bonding fibers may be intermixed or intertwined with the other fibers included in the self-adhesive fiber mat (e.g., the polymer fibers, glass fibers, etc.), which may also help bond the fibers together. The bonding fibers may include single component fibers made of a low melting point temperature material and/or may include bi-component fibers that may have a core material made of a high melting point temperature material and an outer material or sheath material made of a low melting point temperature material. The outer material may soften and/or melt when exposed to a high temperature to allow the bonding fibers to bond or adhere with one or more fibers and/or surfaces. The core material, which may not soften and/or melt when exposed to the high temperature, may provide support for the bonding fibers when the outer material is softened and/or melted. For example, the core material may stabilize the low melting point temperature outer material to keep the softened and/or melted outer material from migrating throughout the self-adhesive fiber mat and/or pooling when in the softened and/or melted state.

The bonding resin may be heat and/or pressure sensitive so that the bonding resin flows (e.g., softens and/or melts) under heat and/or pressure and thereby saturates, soaks, presses into, and/or forms with one or more fibers or surfaces of another mat. The bonding resin may include a sticky polymer such as a polyolefin dispersion and/or blend of polyolefin dispersion with an acrylic based binder. In one embodiment, the self-adhesive fiber mat and/or fiber mat product may contain between 1% and 50% bonding resin (or bonding fibers). In an exemplary embodiment, the bonding resin does not melt, but softens enough that it becomes sticky or tacky so that fibers and/or surfaces pressed into or against the resin adhere thereto.

The use of bonding fibers and/or bonding resins may allow for increased control over the adhesion between the self-adhesive fiber mat and one or more other mats, films, or sheets and/or may improve one or more physical properties of the resulting fiber mat product when compared with the use of adhesives or glues. For example, the bonding fibers and/or bonding resins may provide for more uniform adhesion between the self-adhesive fiber mat and another mat, film, or sheet adhered thereto when compared with the use of adhesive materials. In addition, the boding fibers and/or bonding resins may provide an improved porosity, tensile strength, uniform thickness, etc. of the resulting fiber mat product when compared with fiber mats that apply an adhesive material during lamination or bonding.

The adhesive strength of the self-adhesive fiber mat, or in other words the adhesion between the self-adhesive fiber mat and one or more other mats may be controlled through the type of bonding fibers used (e.g., bi-component, single component), the type of material used for the low melting point temperature material, the thickness of the low melting point temperature material (e.g., the bonding fiber diameter, the outer diameter of the outer material compared with the diameter of the core material, etc.), the length of the bonding fiber, the amount and/or percentage of bonding fibers used, the thickness of the self-adhesive fiber mat, the amount of heat used in the bonding process, the exposure of the bonding fibers to the heat, the pressure applied to the self-adhesive fiber mat and other mat, the rate of cooling of the self-adhesive fiber mat, the distribution and/or arrangement of the bonding fibers within the self-adhesive fiber mat, etc. Similarly, the adhesive strength may be controlled through the type and/or composition of the bonding resin, the amount of bonding resin used, the amount of heat and/or duration of exposure to heat, the pressure applied, the rate of cooling, etc.

The binder having the bonding resin may be used in place of or in addition to the bonding fibers. For example, in one embodiment, the self-adhesive fiber mat may use a binder comprising bonding resin while not using bonding fibers. The binder may include a material separate from the bonding resin that temporarily or permanently bonds the fibers of the self-adhesive fiber mat together, or the bonding resin may both temporarily bond the fibers prior to a lamination or bonding process and permanently bond the fibers after the lamination or bonding process. Upon application of pressure and/or heat, the bonding resin may soften and/or melt and soak or saturated into a mat, film, or sheet placed adjacent to the self-adhesive fiber mat. The self-adhesive fiber mat may then be cooled so that the bonding resin hardens and bonds or adheres the self-adhesive fiber mat with the mat, film, or sheet. In another embodiment, the self-adhesive fiber mat may use both a binder comprising bonding resin and bonding fibers. Such embodiment provides two sources of bonding or adhesion for the self adhesive fiber mat. In yet another embodiment, the self-adhesive fiber mat may use bonding fibers without using a binder or may use a binder that does not include a bonding resin.

In a specific embodiment, the self-adhesive fiber mat may be bonded to a polymeric battery separator film without the use of additional adhesive glues to form a battery separator mat (e.g., battery separator mat for a lead acid battery). The resulting multilayered mat product (battery separator) may then be placed between positive and negative electrodes in an electrolyte to prevent physical contact between the electrodes. Because the multilayered mat product (battery separator) is free of adhesive glues and/or because the adhesion between the self-adhesive mat and polymeric separator film may be highly controlled, the multilayered mat product may have better pore structure compared to a similar battery separator that includes an adhesive glue. This may minimize the overall electrical resistance of the multilayered mat product (battery separator). The bonding fibers, glass and/or polymer fibers, and/or bonding resin can be chosen to produce a self-adhesive fiber mat having a desired thickness, tortuousity, and/or wettability to minimize the electrical resistance of the multilayered mat product (battery separator). For example, the bonding fibers and/or bonding resin can be selected so that the electrolyte solution completely wets the surface of the polymeric fiber mat product. These and other advantages of the self-adhesive fiber mat will become more apparent with reference to the figures.

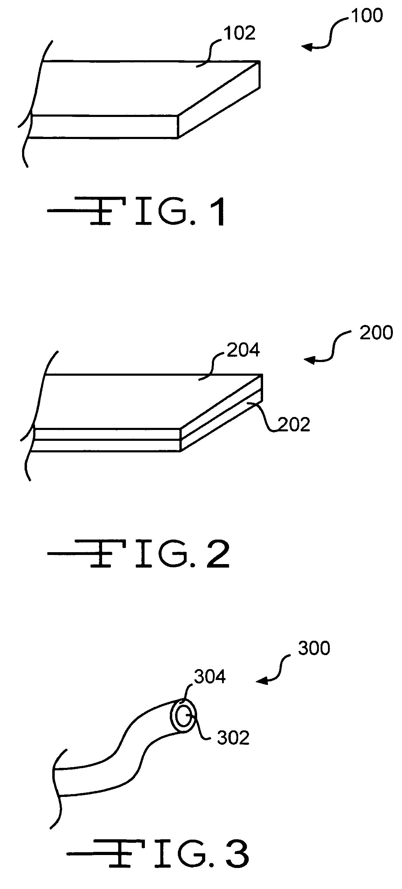

FIG. 1 illustrates a self-adhesive fiber mat 100 that may include a single layer of one or more types of fibers. In one embodiment, the single layer of fibers may include a plurality of bonding fibers. The bonding fibers may be intermixed, intertwined, and/or entangled within the self-adhesive fiber mat 100. The self-adhesive fiber mat 100 may also, but need not, include a plurality of other fibers, such as glass fibers and/or polymer fibers, that may be intermixed and/or entangled with the bonding fibers or that may form a separate layer atop or adjacent to the layer of bonding fibers. The bonding fibers may be made of a material having a low melting point temperature, such as a melting point temperature between about 90 degrees Celsius and 200 degrees Celsius. The melting point temperature of the bonding fibers may enable the bonding fibers to soften and/or melt when exposed to heat so that the self-adhesive fiber mat may be bonded with a material that is placed adjacent to a surface of the self-adhesive fiber mat 100. For example, an additional fiber mat (not shown) may be placed adjacent to and bonded with a first face 102 of the self-adhesive fiber mat 100. In addition, another fiber mat (not shown) may be placed adjacent to and bonded with a face opposite the first face 102 so that the self-adhesive fiber mat is sandwiched between and bonded to the two fiber mats.

The bonding fibers may be made of single component fibers having the low melting point temperature or may be made of bi-component fibers having a core material surrounded by an outer material. The core material may have a high melting point temperature relative to the outer material so that the core material does not substantially soften and/or melt when the bonding fibers are exposed to heat (e.g., the core material may have a melting point temperature greater than 130 degrees Celsius). The outer material may have a low melting point temperature relative to the core material, which may be between the range of about 90 degrees Celsius and 200 degrees Celsius. The outer material may soften and/or melt when exposed to heat to allow the bonding fibers to bond with one or more adjacent materials as previously described. The core material may provide support for the bonding fibers when exposed to heat, such as by preventing the softened and/or melted outer material from migrating throughout the self-adhesive fiber mat 100 and/or pooling within the mat as previously described.

The self-adhesive fiber mat 100 may additionally or alternatively include a binder that temporarily or permanently bonds or adheres the bonding fibers and/or other fibers of the self-adhesive fiber mat 100. The binder may include a bonding resin that softens and/or melts when exposed to heat and/or pressure and that also enables the self-adhesive fiber to bond with a material that is placed adjacent to a surface of the self-adhesive fiber mat 100. The binder having the bonding resin may be used in place of or in addition to the bonding fibers. For example, the binder may temporarily bond the fibers of the self-adhesive fiber mat 100 together until the self-adhesive fiber mat is exposed to heat, afterwhich the bonding fibers and/or bonding resin soften and/or melt and adhere or bond the fibers of the self-adhesive fiber mat together in addition to bonding or adhering the self-adhesive fiber mat with an additional mat, film, or sheet. The binder may allow the self-adhesive fiber mat 100 to be placed in tension without tearing or otherwise coming apart during a lamination and/or bonding process. In one embodiment, the binder comprises a 5% polymer binder. The binder may also include 5-50% bonding resin.

In one embodiment, the self-adhesive fiber mat 100 does not include bonding fibers, but instead includes a single layer of one or more types of fibers temporarily or permanently bonded together with the binder comprising bonding resin described herein. The bonding resin may soften and/or melt upon the application or heat and/or pressure and flow, saturate, and/or soak into a mat, film, or sheet placed adjacent to the first face 102 of the self-adhesive fiber mat 100. Likewise, the self-adhesive fiber mat 100 comprising the bonding resin may be sandwich between and bonded to two other mats, films, or sheets. In another embodiment, the self-adhesive fiber mat 100 includes bonding fibers, but does not include a binder or includes a binder without the bonding resin.

FIG. 2 illustrates a fiber mat product 200 that may include a self-adhesive fiber mat 202 bonded/adhered to another mat, film, or sheet (e.g., a polymeric film sheet) 204. The self-adhesive fiber mat 202 may include a plurality of single component bonding fibers and/or may include a plurality of bi-component bonding fibers. The self-adhesive fiber mat 202 may also include a plurality of other fibers (e.g., polymer/glass fibers) intermixed or intertwined with the bonding fibers. Alternatively or additionally, the self-adhesive fiber mat 202 may include a binder having a bonding resin.

In embodiments that employ bi-component fibers, the bi-component bonding fibers may include a core material having a high melting point temperature and an outer material having a low melting point temperature as previously described. In embodiments that employ bonding resins, the bonding resin may be pressure and/or heat sensitive as previously described. The polymeric film sheet 204 may be a polymeric battery separator film. The polymeric film sheet 204 may be coextensive with the self-adhesive fiber mat 202. Bonding between the self-adhesive fiber mat 202 and the polymeric film sheet 204 may occur as a result of the outer material of the bonding fibers and/or the boding resin bonding with a surface and/or fibers of the polymeric film sheet 204. For example, the softened and/or melted outer material and/or bonding resin may be compressed into the fibers and/or surface of the polymeric film sheet 204 and cooled so that the outer material and/or bonding resin hardens and the bonding fibers and/or bonding resin reform with the fibers and/or surface of the polymeric film sheet compressed into the outer material and/or bonding resin.

FIG. 3 illustrates a bi-component fiber 300 that may be used in the self-adhesive mats described herein. The bi-component fiber 300 may include a core material 302 that has a high melting point temperature and an outer material 304 that surrounds the core material that has a low melting point temperature as previously described. The core material 302 may support the bi-component fiber 300 when the fiber is exposed to heat and the outer material 304 may soften and/or melt when exposed to heat to enable the bi-component fiber to bond with one or more adjacent material by adhesion as previously described. In one embodiment, the outer material comprises a melting point temperature between about 90 degrees Celsius and 200 degrees Celsius. In another embodiment, the outer material comprises a melting point temperature between about 105 degrees Celsius and 140 degrees Celsius.

The core material 302 may be made from one or more of the following materials: aliphatic polyester (e.g., Bionelle®), co-polyester, co-polypropylene, ethyl vinyl acetate, high density polyethylene, polylactic acid, etc. The outer material 304 may be made from one or more of the following materials: aliphatic polyethylene terephthalate (e.g., Biomax®), polylactic acid, polyester, polyethylene, polypropylene, polyethylene terephthalate, polyethylene vinyl acetate, etc. Some specific bi-component core material/outer material combinations may include: Bionelle®/Biomax® Aliphatic Polyethylene Terephthalate; Bionelle®/PolyLactic Acid (PLA); Co-polyester/Polyester; Co-polypropylene/Polypropylene; Ethyl Vinyl Acetat/Polypropylene; High Density Polyethylene (HDPE)/Polyester; High Density Polyethylene (HDPE)/Polypropylene; PolyLactic Acid (PLA)/ PolyLactic Acid (PLA); Polyethylene/Polypropylene; Polypropylene/Polyethylene Terephthalate; Polypropylene/Polyethylene Vinyl Acetate; etc. where the material on the left of the slash represents the core material 302 and the material on the right of the slash represents the outer material 304.

The bi-component fibers 300 may have varied lengths or may have roughly uniform lengths. In one embodiment, bi-component fibers 300 having lengths between about 2mm and about 20mm are used, although the fiber lengths are not limited to this range. In addition, depending on the fibers used, the Denier per Filament (dpf) value of the bi-component fibers 300 may vary. In one embodiment bi-component fibers 300 having dpf values between about 0.5 and about 8.0 are used, although the dpf values are likewise not limited to this range. The ratio of core material to outer material may vary depending on the adhesion desired and/or on the material, fiber, and/or surface that the bi-component fibers 300 will be adhered to. In one embodiment, the bi-component fiber comprises between about 2% and 40% outer material, respectively low melting point temperature resin (A).

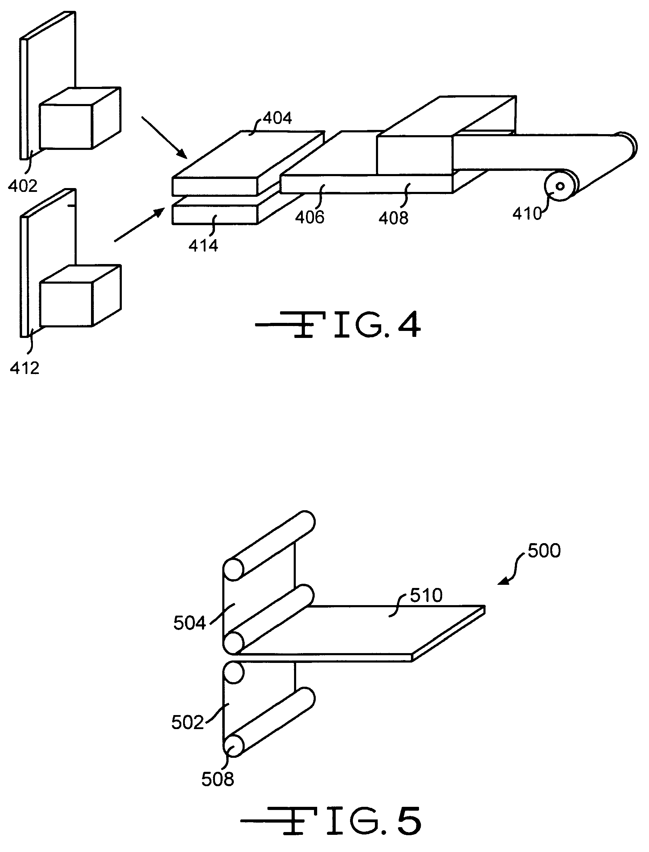

FIG. 4 illustrates a system 400 that may be used to manufacture a self-adhesive fiber mat, such as the self-adhesive fiber mats described herein. The system may include one or more fiber dispersion devices or stations, 402 & 412, in which the bonding fibers and/or other fibers may be dispersed in a liquid such as a white water solution. The white water solution may include water, a polymer, a surfactant, a defoamer, the bonding fibers, other fibers, etc. The surfactant may facilitate in dispersing the fibers (bonding fibers and/or other fibers) throughout the liquid solution by controlling the surface tension of the liquid. The defoamer may control foaming during the dispersion process. The polymer may control the viscosity of the liquid. The viscosity and/or surface tension of the white water solution may be controlled to facilitate in dispersing the bonding fibers and/or other fibers throughout the white water solution.

In one embodiment, the system 400 includes a single fiber dispersion device or station 402 and the bonding fibers and/or other fibers (e.g., glass fibers, polymer fibers, etc.) are dispersed in the same liquid solution. In another embodiment, the system 400 includes a first fiber dispersion device or station 412, in which one or more types of fibers (e.g., glass fibers, polymer fibers, etc.) are dispersed in a first liquid solution and the system 400 includes a second fiber dispersion device or station 402, in which bonding fibers are dispersed in a second liquid solution.

The system 400 may also include a fiber forming device or station 404 that is used to form a web or mat of fibers from the liquid solution (e.g., a wet laid fiber web) by removing the liquid from the solution. The fiber forming device or station 404 may include one or more hydroformers. The web of fibers may include intermixed, entangled, intertwined, and/or randomly oriented fibers (bonding fibers and/or other fibers). The fiber forming device or station 404 may include a porous moving belt onto which the liquid solution may be distributed. The fiber forming device or station 404 may also include a vacuum system 414 to facilitate in removal of the liquid from the liquid solution so that only the fibers remain. The liquid may be removed by applying a vacuum underneath the porous moving belt to draw the liquid through the porous moving belt to form a wet web of fibers. In one embodiment involving two fiber dispersion stations or devices, 402 & 412, one of the liquid solutions (e.g., the first liquid solution) may be distributed over the fiber forming device or station 404 and the liquid removed from the liquid solution to form a first layer of fibers (e.g., a layer of glass fibers). The other liquid solution (e.g., the second liquid solution) may then be poured or distributed over the first layer of fibers and the liquid removed from the liquid solution to form a second layer of fibers (e.g., bonding fibers) atop and/or adjacent to the first layer of fibers so that a bi-layer web or mat of fibers is formed. In another embodiment, the system 400 may include two hydroformers so that each liquid solution is provided to a different hydroformer. In such an embodiment, the weight ratio of bonding fibers to other fibers in the resulting self-adhesive fiber mat may be varied by controlling the flow rates to each of the hydroformers. While the system has been described as forming the second layer of fibers (e.g., the bonding fibers) atop the first layer of fibers (e.g., the layer of glass fibers), the process may be reversed so that the second layer of fibers is formed first and first layer of fibers is positioned atop the second layer of fibers.

The system 400 may further include a binder application device or station 406. The binder station or device 406 may coat and/or apply a binder to the web of fibers that may temporarily or permanently bond the fibers together. The binder may include a polymeric emulsion to bond the fibers together and/or to bond the fiber mat to a sheet or film. Additionally, the binder solution may contain surfactants or wetting agents to control the wettability, defoamer to control the foaming during the mixing of binder ingredients, etc. Further, the polymeric emulsion in the binder may include a bonding resin, such as a polyolefin dispersion or a blend of polyolefin with an acrylic based binder. The binder may be vacuumed or sucked through the web of fibers so that the binder is roughly uniform throughout the thickness of the web of fibers. The binder may temporarily bond the fibers to allow the self-adhesive fiber mat to be placed in tension during winding of the self-adhesive fiber mat and/or during lamination or bonding with another mat, afterwhich the single or bi-component fibers and/or bonding resin may bond the various fibers, surfaces, and/or materials together.

In addition, the binder may facilitate in maintaining the tensile strength of the self-adhesive mat while the bonding fibers are in a softened and/or melted state. In one embodiment, the white water liquid solution into which the bonding fibers and/or other fibers are dispersed acts as a binder so that the fibers are bonded together after removing the liquid from the white water solution. In such an embodiment, the system 400 need not include the binder application device or station 406 because no additional binders and/or resins (bonding resin, binder, etc.) need be applied to the web of fibers to bond the fibers together. In another embodiment, the white water solution may be used as the binder in the binder application device or station 406. For example, the whitewater solution may include an adhesive material that bonds the fibers after the liquid is removed. In embodiments that use only a binder having bonding resins (i.e., embodiments that do not use bonding fibers), the binder application device or station 406 may apply and/or coat the binder to a web of fibers that does not include bonding fibers.

The system 400 may additionally include a dryer station or device 408 that may dry the web of fibers to substantially remove any remaining liquid. The binder may bond the fibers together as the remaining liquid is removed (permanent bonding through the application of heat and/or pressure may occur later, such as during a lamination process illustrated in FIG. 5). The dried web of fibers may form the self-adhesive fiber mat. The dryer may apply heat to the web of fibers to facilitate removal of the liquid (e.g., water). In one embodiment, the temperature in the dryer is maintained between 200 and 500 degrees Fahrenheit. The application of heat may result in some softening and/or melting of some of the bonding fibers and/or boding resin, but softening and/or melting may be minimized by controlling the heat and/or duration of exposure of the web of fibers to the heat. Further, the bonding fibers and/or boding resin may harden or re-crystallize after drying to offset any softening and/or melting that does occur. A cooling device, such as a fan, may be placed proximate to the dryer so that the self-adhesive fiber mat is cooled upon exiting the dryer.

Depending on the process used (e.g., one or two fiber dispersion stations, application of the binder, etc.), the resulting self-adhesive fiber mat may comprise a single layer having single component bonding fibers, bi-component bonding fibers, other fibers (e.g., glass fibers, polymer fibers, etc.), or any combination thereof (e.g., a combination of single component, bi-component, and glass fibers). Alternatively, the resulting self-adhesive fiber mat may comprise a multilayered fiber mat having separate layers or mixed layers that may include single component bonding fibers, bi-component bonding fibers, other fibers (e.g., glass fibers, polymer fibers, etc.), or any combination thereof. Yet alternatively, the resulting self-adhesive fiber mat may comprise a single or multilayered fiber mat having one or more layers that may include one or more types of fibers (e.g., bonding fibers, glass fibers, polymer fibers, etc.) and a binder including the bonding resin.

The system 400 may additionally include a winder device or station 410 that winds the self-adhesive fiber mat into a roll. One or more belts may connect each of the stations or devices of the system 400 so that the liquid solution and/or web of fibers continually and/or automatically move from one station or device to another until the self-adhesive mat is wound as a roll by the winder.

FIG. 5 illustrates a device 500 that may be used to laminate or bond a self adhesive fiber mat 502 with one or more other mats, films, or sheets 504 (e.g., a polymeric film sheet) to form a fiber mat product 510 (e.g., a battery separator film). The device 500 may include a plurality of rollers 508 that may apply heat and/or pressure to the self-adhesive fiber mat 502 and the other mat, film, or sheet, 504 that is being laminated or bonded to the self-adhesive fiber mat. The heat and/or pressure applied by one or more of the rollers 508 may cause the bonding fibers and/or bonding resin of the self-adhesive fiber mat to soften and/or melt and may press the self-adhesive fiber mat 502 and other mat 504 together and thereby force the bonding fibers and/or bonding resin to contact, mesh with, flow into, saturate, soak, or otherwise form together with a fiber and/or surface of the other mat 504 (e.g., the pressure may force the bonding fibers and/or bonding resin to mesh or form together with a fiber or surface of the polymeric film sheet). In one embodiment, a separate heating element (e.g., radiant heater, convention heater, etc.) may apply heat to the self-adhesive fiber mat prior to and/or after the rollers apply pressure to the mat. In one embodiment, a temperature of approximately 300 degrees Fahrenheit is maintained during the bonding or lamination process to soften the bonding resin and/or bonding fibers. The resulting fiber mat product 510 may then be cooled so that the self-adhesive fiber mat 502 and other mat 504 are adhesively bonded as the bonding fibers and/or bonding resin cool. For example, a fan (not shown) may be placed proximate to one or more of the rollers to cool the bonding fibers and/or bonding resin of the self-adhesive fiber mat 502 so that they harden and reform affixed to the fibers and/or surface of the other mat 504. In another embodiment, the self-adhesive fiber mat 502 and other mat 504 may be placed into an oven that applies heat to soften and/or melt the bonding fibers and/or bonding resin. Pressure may also be applied to the self-adhesive fiber mat 502 and other mat 504 while they are in the oven. In yet another embodiment, the bonding resin may be pressure sensitive so that as the self-adhesive fiber mat and other mat are pressed together by one or more of the roller, the bonding resin softens and flows, soaks, and/or saturates into the other mat. Upon exiting the rollers, the bonding resin may harden and bond the self-adhesive fiber mat 502 and other at 504.

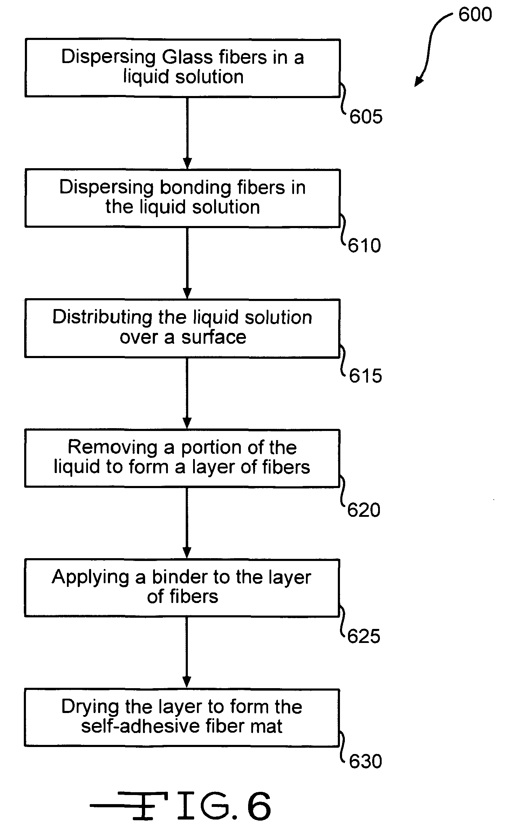

FIG. 6 illustrates a method 600 for making a self-adhesive fiber mat. At block 605, glass fibers and/or other fibers (e.g., polymer fibers) may be dispersed in a liquid solution. At block 610, bonding fibers may be dispersed in the liquid solution so that the liquid solution comprises dispersed glass fibers and dispersed bonding fibers (e.g., the glass fibers and bonding fibers may be dispersed together in the same tank). The bonding fibers may be single component or bi-component fibers that may include a material having a low melting point temperature as previously described. Block 610 may not be employed in embodiments that only use the binder having the bonding resin. At block 615, the liquid solution may be distributed over a porous surface, such as the surface of a hydroformer or fiber forming station as previously described. At block 620, a portion of the liquid may be removed from the liquid solution so that the dispersed glass fibers and/or bonding fibers form a layer of intermixed/entangled glass fibers and/or bonding fibers. At block 625, a binder may be applied to the layer of intermixed/entangled glass fibers and/or bonding fibers to at least temporarily bond the fibers. The binder may include a bonding resin as described herein. In embodiments that use bonding fibers and/or glass fibers only, the binder may not be applied or a binder without the bonding resin may be applied. In other embodiments, the liquid solution may include the binder. At block 630, the layer of intermixed/entangled glass and/or bonding fibers is dried to form the self-adhesive fiber mat.

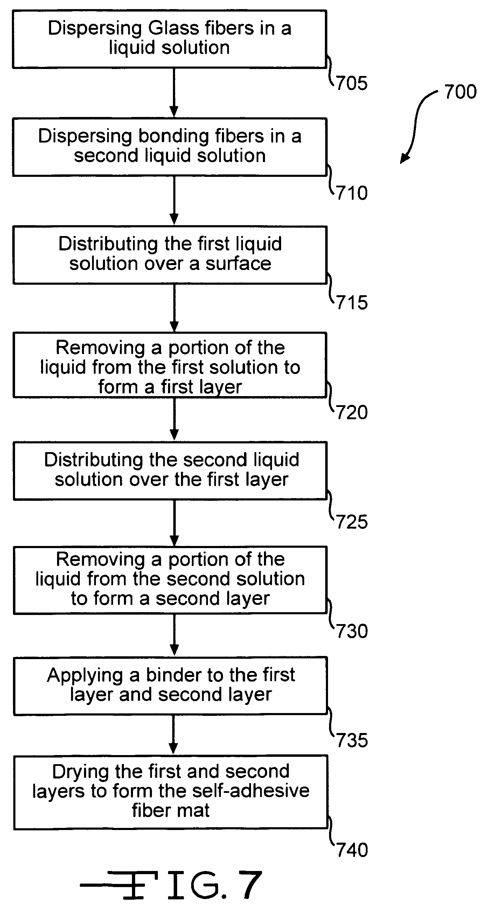

FIG. 7 illustrates a method 700 for making a multi-layered self-adhesive fiber mat. At block 705, glass fibers and/or other fibers (e.g., polymer fibers) may be dispersed in a first liquid solution. At block 710, bonding fibers may be dispersed in a second liquid solution. The bonding fibers may be single component or bi-component fibers as previously described that soften and/or melt to allow the bonding fibers to bond with one or more adjacent materials. At block 715, the first liquid solution may be distributed over a porous surface, such as a hydroformer or fiber forming station. At block 720, a portion of the liquid from the first liquid solution may be removed to form a first layer of glass and/or polymer fibers.

At block 725, the second liquid solution may be distributed over the first layer and/or distributed over another porous surface, such as another hydroformer or another fiber forming station. At block 730, a portion of the liquid from the second liquid solution may be removed to form a second layer of bonding fibers. The second layer of bonding fibers may be formed atop the first layer or may be formed separate from the first layer and applied or positioned atop the first layer subsequent to forming the second layer. At block 735, a binder may be applied to the first and second layers to at least temporarily bond the first layer with the second layers. In one embodiment, a binder is not applied. In another embodiment, the first and/or second liquid solutions contain a binder material. At block 740, the first and second layers may be dried to form the multi-layered self-adhesive fiber mat.

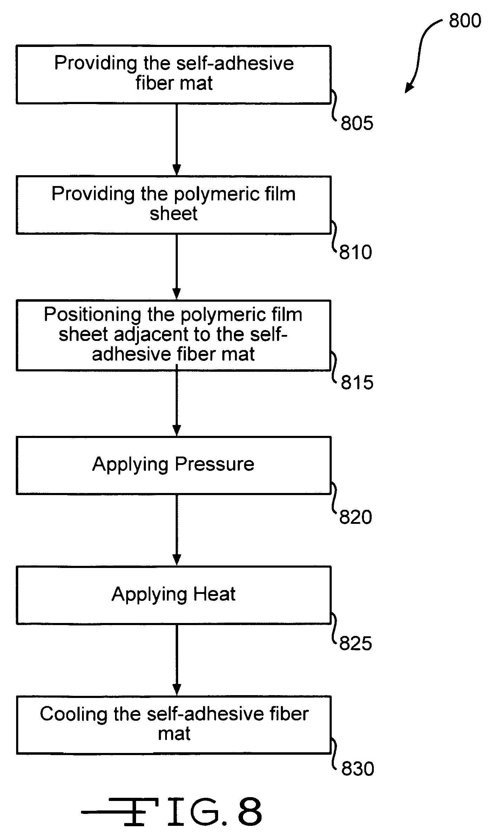

FIG. 8 illustrates a method 800 for bonding a self-adhesive fiber mat with a polymeric film sheet, or in other words, illustrates a method for bonding a self-adhesive fiber mat with another mat, film, or sheet. At block 805, the self-adhesive fiber mat may be provided. The self-adhesive fiber mat may be similar to those described herein having a single or bi-component bonding fiber and/or bonding resin that softens and/or melts to allow the bonding fiber and/or bonding resin, and therefore the self-adhesive fiber mat, to bond or adhere with the polymeric film sheet or other mat when exposed to heat and/or pressure. At block 810, the polymeric film sheet may be provided. At block 815, the polymeric film sheet may be positioned adjacent to the self-adhesive fiber mat. At block 820, pressure may be applied to the polymeric film sheet and the self-adhesive fiber mat, such as by passing the polymeric film sheet and self-adhesive fiber mat through one or more rollers as illustrated in FIG. 5. The applied pressure may press the self-adhesive fiber mat and polymeric film sheet together so that the bonding fibers and/or bonding resin contact the fibers and/or surface of the polymeric film sheet. The pressure may cause the bonding resin to soften and flow, soak, or saturate into the polymeric film sheet. At block 825, heat may be applied to the self-adhesive fiber mat and/or the polymeric film sheet to soften and/or melt the bonding fibers and/or bonding resin. The heat may be applied through the rollers and/or through any other device (e.g., radiant heater, convention heater, etc.). At block 830, the self-adhesive fiber mat and/or the resulting fiber mat may be cooled to harden the bonding fibers and/or bonding resin. As previously described, the polymeric film sheet and the self-adhesive fiber mat may be adhesively bonded as the bonding fibers and/or bonding resin cool.

In describing the invention, certain embodiments have been used to illustrate the invention and the practices thereof. However, the invention is not limited to these specific embodiments as other embodiments and modifications within the spirit of the invention will readily occur to those skilled in the art on reading this specification. Thus, the invention is not intended to be limited to the specific embodiments disclosed, but is to be limited only by the claims appended hereto.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A battery separator for separating the positive and the negative electrodes of a lead acid battery comprising an adhesive fiber mat, said fiber mat being adhered or bonded to a polymeric separator film without applying an adhesive material, the fiber mat product comprising (A):
(i) a plurality of glass fibers and
(ii) a plurality of bi-component fibers intermixed with the glass fibers,
wherein each of the plurality of the bi-component fibers comprises a core material having a high melting point temperature and an outer material surrounding the core material, the outer material having a low melting point temperature relative to the core material, wherein the outer material softens when exposed to heat to thereby enable the bi-component fiber to bond with one or more adjacent materials, and wherein the core material provides support for the bi-component fiber when the outer material is softened,
or (B)
a plurality of fibers;
a length;
a width; and
a bonding face defined by the length and the width; wherein the plurality of fibers comprises either or both:
(iii) a plurality of bonding fibers having a melting point temperature between about 90°C and 200°C so that the plurality of bonding fibers soften when exposed to heat to thereby enable one or more of the plurality of bonding fibers to bond with a material adjacent to the bonding face; and
(iv) a binder comprising a bonding resin having a low melting point temperature relative to the plurality of fibers so that the bonding resin softens when exposed to heat to thereby enable the bonding resin to bond with a material adjacent to the bonding face.
wherein said fibers are wet laid.

2. The separator of claim 1, wherein in the fiber mat each fiber of the plurality of bi-component fibers is between about 2mm and 20mm in length.

3. The separator of claim 1, wherein in the fiber mat the core material comprises one or more materials selected from the group consisting of:
aliphatic polyester (bionelle);
co-polyester;
co-polypropylene;
ethyl vinyl acetate;
high density polyethylene; or
polylactic acid; and
the outer material comprises one or more materials selected from the group consisting of:
aliphatic polyethylene terephthalate (Biomax);
polylactic acid;
polyester;
polyethylene;
polypropylene;
polyethylene terephthalate; or
polyethylene vinyl acetate.

4. The separator of claim 1, wherein in the fiber mat the low melting point temperature of the outer material is between 90°C and 200°C.

5. The separator of claim 1, wherein in the fiber mat the bonding resin comprises a polyolefin dispersion or a blend of polyolefin dispersion with an acrylic based binder.

6. The separator of 1, wherein the fiber mat (B) further comprising a plurality of glass fibers, wherein:
- the plurality of glass fibers form a separate layer substantially coextensive with and adjacent to the adhesive fiber mat, or
- the plurality of glass fibers are intermixed with the plurality of fibers.

7. The separator of claim 1, wherein in the fiber mat each fiber of the plurality of bonding fibers having a melting point temperature between about 90°C and 200°C further comprises a bi-component fiber comprising:
(i) a core material having a melting point temperature greater than 130°C; and
(ii) an outer material surrounding the core material, the outer material having a melting point temperature between about 90°C and 200°C, wherein:
the outer material softens when exposed to heat to thereby enable the bi-component fiber to bond with the material adjacent to the bonding face, and
the core material provides support for the bi-component fiber when the outer material is softened.

8. The separator of claim 1, wherein in the fiber mat the bi-component fibers are composed of a high melting point temperature resin (B) and a low point melting resin (A), the high melting point temperature resin (B) having a melting point which is at least 5°C higher than the melting point of the low melting point temperature resin (A).

9. The separator of claim 1, wherein the upper limit for the amount of bi-component fibers is not more than 60% by weight of the amount of total fibers, preferably not more than 40% by weight of the amount of total fibers.

10. The separator of claim 1, wherein the upper limit for the amount of bonding fibers is not more than 50% by weight of the amount of total fibers, preferably less than 35% by weight of the amount of total fibers.

11. The separator of claim 1, wherein the bonding resin in the fiber mat is present in amounts of 1 to 50%.

12. The separator of claim 1, wherein the adhesive fiber mat is self-adhesive and adhered or bonded to the polymeric separator film without applying an additional adhesive material.

## Patentansprüche

1. Batterieseparator zum Trennen der positiven und der negativen Elektroden einer Blei-Säure-Batterie, umfassend eine klebende Fasermatte, wobei die Fasermatte an einen polymeren Separatorfilm geklebt oder gebunden ist, ohne ein klebendes Material anzuwenden, wobei das Fasermattenprodukt umfasst (A):
(i) mehrere Glasfasern und
(ii) mehrere Zweikomponentenfasern, die mit den Glasfasern vermischt sind, wobei jede der mehreren Zweikomponentenfasern ein Kernmaterial, das eine hohe Schmelzpunkttemperatur aufweist, und ein Außenmaterial, welches das Kernmaterial umgibt, umfasst, wobei das Außenmaterial im Verhältnis zu dem Kernmaterial eine niedrige Schmelzpunkttemperatur aufweist, wobei das Außenmaterial erweicht, wenn es Wärme ausgesetzt wird, um dadurch zu ermöglichen, dass sich die Zweikomponentenfaser mit einem oder mehreren benachbarten Materialien verbindet und wobei das Kernmaterial die Zweikomponentenfaser stützt, wenn das Außenmaterial erweicht wird,
oder (B):
mehrere Fasern;
eine Länge;
eine Breite; und
eine Bindungsstirnfläche, die durch die Länge und die Breite definiert ist;
wobei die mehreren Fasern eines oder beides umfassen:
(iii) mehrere Bindungsfasern, die eine Schmelzpunkttemperatur zwischen etwa 90 °C und 200 °C aufweisen, sodass die mehreren Bindungsfasern erweichen, wenn sie Wärme ausgesetzt werden, um dadurch zu ermöglichen, dass sich eine oder mehrere der mehreren Bindungsfasern mit einem Material verbinden, das der Bindungsstirnfläche benachbart ist; und
(iv) ein Bindemittel, umfassend ein Bindeharz, das im Verhältnis zu den mehreren Fasern eine niedrige Schmelzpunkttemperatur aufweist, sodass das Bindeharz erweicht, wenn es Wärme ausgesetzt wird, um dadurch zu ermöglichen, dass sich das Bindeharz mit einem Material, das der Bindungsstirnfläche benachbart ist, verbindet,
wobei die Fasern nassgelegt sind.

2. Separator nach Anspruch 1, wobei in der Fasermatte jede Faser der mehreren Zweikomponentenfasern zwischen etwa 2 mm und 20 mm lang ist.

3. Separator nach Anspruch 1, wobei in der Fasermatte das Kernmaterial ein oder mehrere Materialien umfasst, ausgewählt aus der Gruppe, bestehend aus:
aliphatischem Polyester (Bionelle);
Co-Polyester;
Co-Polypropylen;
Ethylvinylacetat;
hochdichtem Polyethylen; oder
Polymilchsäure; und
das Außenmaterial ein oder mehrere Materialien umfasst, ausgewählt aus der Gruppe, bestehend aus:
aliphatischem Polyethylenterephthalat (Biomax);
Polymilchsäure;
Polyester;
Polyethylen;
Polypropylen;
Polyethylenterephthalat; oder
Polyethylenvinylacetat.

4. Separator nach Anspruch 1, wobei in der Fasermatte die niedrige Schmelzpunkttemperatur des Außenmaterials zwischen 90 °C und 200 °C beträgt.

5. Separator nach Anspruch 1, wobei in der Fasermatte das Bindeharz eine Polyolefindispersion oder eine Abmischung aus Polyolefindispersion mit einem Bindemittel auf Acrylbasis umfasst.

6. Separator nach Anspruch 1, wobei die Fasermatte (B) ferner mehrere Glasfasern umfasst, wobei:
- die mehreren Glasfasern eine separate Lage bilden, die mit der klebenden Fasermatte im Wesentlichen deckungsgleich und dieser benachbart ist, oder
- die mehreren Glasfasern mit den mehreren Fasern vermischt sind.

7. Separator nach Anspruch 1, wobei in der Fasermatte jede Faser der mehreren Bindungsfasern, die eine Schmelzpunkttemperatur zwischen etwa 90 °C und 200 °C aufweisen, ferner eine Zweikomponentenfaser umfasst, welche umfasst:
(i) ein Kernmaterial, das eine Schmelzpunkttemperatur aufweist, die höher als 130 °C ist; und
(ii) ein Außenmaterial, welches das Kernmaterial umgibt, wobei das Außenmaterial eine Schmelzpunkttemperatur zwischen etwa 90 °C und 200 °C aufweist, wobei:
das Außenmaterial erweicht, wenn es Wärme ausgesetzt wird, um
dadurch zu ermöglichen, dass sich die Zweikomponentenfaser mit dem Material, das der Bindungsstirnfläche benachbart ist, verbindet, und
das Kernmaterial die Zweikomponentenfaser stützt, wenn das Außenmaterial erweicht wird.

8. Separator nach Anspruch 1, wobei in der Fasermatte die Zweikomponentenfasern aus einem Harz mit hoher Schmelzpunkttemperatur (B) und einem niedrigschmelzenden Harz (A) zusammengesetzt sind, wobei das Harz mit der hohen Schmelzpunkttemperatur (B) einen Schmelzpunkt aufweist, der um mindestens 5 °C höher als der Schmelzpunkt des Harzes mit der niedrigen Schmelzpunkttemperatur (A) ist.

9. Separator nach Anspruch 1, wobei die obere Grenze für die Menge an Zweikomponentenfasern nicht mehr als 60 Gewichts-% der Menge der gesamten Fasern, vorzugsweise nicht mehr als 40 Gewichts-% der Menge der gesamten Fasern beträgt.

10. Separator nach Anspruch 1, wobei die obere Grenze für die Menge an Bindungsfasern nicht mehr als 50 Gewichts-% der Menge der gesamten Fasern, vorzugsweise weniger als 35 Gewichts-% der Menge der gesamten Fasern beträgt.

11. Separator nach Anspruch 1, wobei das Bindeharz in der Fasermatte in Mengen von 1 bis 50 % vorhanden ist.

12. Separator nach Anspruch 1, wobei die klebende Fasermatte selbstklebend ist und ohne Anwenden eines zusätzlichen klebenden Materials an den polymeren Separatorfilm geklebt oder gebunden ist.

## Revendications

1. Séparateur de batterie pour séparer les électrodes positives et négatives d'une batterie au plomb comprenant un tapis à fibre adhésive, ledit tapis à fibre étant adhéré ou lié à un film de séparateur polymère sans appliquer un matériau adhésif, le produit de tapis à fibre comprenant (A):
(i) une pluralité de fibres de verre et
(ii) une pluralité de fibres à deux composants entremêlées avec les fibres de verre, où chacune de la pluralité de fibres à deux composants comprend un matériau de noyau ayant une température du point de fusion élévée et un matériau extérieur environnant le matériau de noyau, le matériau extérieur ayant une température du point de fusion basse par rapport au matériau de noyau, où le matériau extérieur se ramollit quand exposé à la chaleur et par cela permet à la fibre à deux composants se lier avec un ou plusieurs matériaux adjacents, et où' le matériau de noyau pourvoit support pour la fibre àdeux composants quand le matériau extérieur est ramolli,
ou (B)
une pluralité de fibres;
une longueur;
une largeur; et
une face de liaison définie par la longueur et la largeur; où la pluralité de fibres comprend un ou les deux d'entre:
(iii) une pluralité de fibres de liaison ayant une température du point de fusion entre environ 90 °C et 200 °C de sorte que la pluralité de fibres de liaison se ramollisse quand exposée à la chaleur pour permettre de cette manière à une ou plusieurs de la pluralité de fibres de liaison se lier avec un matériau adjacent à la face de liaison; et
(iv) un liant comprenant une résine de liaison ayant une température du point de fusion basse par rapport à la pluralité de fibres de sorte que la résine de liaison se ramollisse quand exposée à la chaleur pour permettre de cette manière à la résine de liaison se lier avec un matériau adjacent à la face de liaison, où' les dites fibres sont à l'état humide.

2. Séparateur selon la revendication 1, où dans le tapis à fibre chaque fibre de la pluralité de fibres à deux composants est de longueur entre environ 2 mm et 20 mm.

3. Séparateur selon la revendication 1, où dans le tapis à fibre le matériau de noyau comprend un ou plusieurs matériaux choisis du groupe formé de:
polyester aliphatique (bionelle);
co-polyester;
co-polypropylène;
éthyl-acétate de vinyle;
polyéthylène de densité élevée; ou
acide polylactique; et
le matériau extérieur comprend un ou plusieurs matériaux choisis du groupe formé de:
polyéthylène téréphtalate aliphatique (Biomax);
acide polylactique;
polyester;
polyéthylène;
polypropylène;
polyéthylène téréphthalate; ou
polyéthylène-acétate de vinyle.

4. Séparateur selon la revendication 1, où dans le tapis à fibre la température du point de fusion basse de l'autre matériau est entre 90 °C et 200 °C.

5. Séparateur selon la revendication 1, où dans le tapis à fibre la résine de liaison comprend une dispersion de polyoléfine ou un mélange de dispersion de polyoléfine avec un liant acrylique.

6. Séparateur selon la revendication 1, où le tapis à fibre (B) comprenant de plus une pluralité de fibres de verre, où
- la pluralité de fibres de verre forment une couche distincte substantiellement coextensive avec et adjacent au tapis à fibre adhésive, ou
- la pluralité de fibres de verre sont entremêlées avec la pluralité de fibres.

7. Séparateur selon la revendication 1, où dans le tapis à fibre chaque fibre de la pluralité de fibres de liaison ayant une température du point de fusion entre environ 90 °C et 200 °C, comprend de plus une fibre à deux composants comprenant:
(i) un matériau de noyau ayant une température du point de fusion au dessus de 130 °C; et
(ii) un matériau extérieur environnant le matériau de noyau, le matériau extérieur ayant une température du point de fusion entre environ 90 °C et 200 °C, où :
le matériau extérieur se ramollit quand exposé à la chaleur et par cela permet à la fibre à deux composants se lier avec le matériau adjacent à la face de liaison, et
le matériau de noyau pourvoit support pour la fibre à deux composants quand le matériau extérieur est ramolli.

8. Séparateur selon la revendication 1, où dans le tapis à fibreles fibres à deux composants sont composées d'une résine (B) ayant la température du point de fusion élevée et une résine (A) ayant la température du point de fusion basse, la résine (B) à température du point de fusion élevée ayant un point de fusion qui est au moins 5 °C au-dessus du point de fusion de la résine (A) à température du point de fusion basse.

9. Séparateur selon la revendication 1, où la limite supérieure pour la quantité de fibres à deux composants n'est pas supérieure à 60% en poids de la quantité totale de fibres, de préférence n'est pas supérieure à 40 % en poids de la quantité totale de fibres.

10. Séparateur selon la revendication 1, où la limite supérieure pour la quantité de fibres de liaison n'est pas supérieure à 50% en poids de la quantité totale de fibres, de préférence est moins de 35% en poids de la quantité totale de fibres.

11. Séparateur selon la revendication 1, où la résine de liaison dans le tapis à fibre est présente en quantités de 1 à 50%.

12. Séparateur selon la revendication 1, où le tapis à fibre adhésive est auto-adhésive et adhérée et liée au film de séparateur polymère sans appliquer un matériau adhésif supplémentaire.
